# EUROPEAN PATENT APPLICATION

(11) **EP 3 901 236 A1**
(43) Date of publication of application: **27.10.2021**
(21) Application number: 20170865.8
(22) Date of filing: 22.04.2020
(51) Int. Cl.: C10B 53/02

(54) **A METHOD AND SYSTEM FOR PRODUCING GAS FROM BIOMASS**

(71) Applicant: Danmarks Tekniske Universitet, 2800 Kgs. Lyngby (DK)
(72) Inventor: HENRIKSEN, Ulrik Birk, 2860 Søborg (DK); AHRENFELDT, Jesper, 3300 Frederiksværk (DK)
(74) Representative: Patentgruppen A/S

(57) **Abstract**

Disclosed is a method for producing gas from biomass comprising feeding biomass to a pyrolysis unit, pyrolyzing the biomass while transporting the biomass through the pyrolysis unit to transform the biomass into pyrolysis gas and biochar, raising the temperature of the pyrolysis gas in a partial oxidation unit in which said pyrolysis gas is partial oxidized, guiding the partial oxidized pyrolysis gas through a pyrolysis gas mantle enclosing a part of the pyrolysis unit to provide heat to the pyrolysis process in said pyrolysis unit, guiding the partial oxidized pyrolysis gas from the pyrolysis gas mantle to a cooling unit in which the temperature of the partial oxidized pyrolysis gas is lowered, guiding a portion of the biochar into a biochar filter, and guiding the cooled pyrolysis gas through the biochar in the biochar filter.

Furthermore, a system for producing gas from biomass is disclosed.

## Description

### Field of the invention

The present invention relates to a method and system for producing gas by pyrolysis of biomass.

### Background of the invention

Due to the increased focus on reducing the carbon dioxide emissions from the combustion of fossil fuels for producing power, such as electrical power for domestic and industrial use, biomass has become an increasingly recognized source for generating clean gas to be used in e.g. power generating turbines and engines. This is usually achieved by pyrolysis of biomass material.

The document EP 2 808 377 B1 discloses a system and method for gasifying lumpy fuels using a pyrolysis reactor. Lumpy fuels such as biogenic fuels are pyrolyzed using a pyrolysis reactor and pyrolysis gas emerging from the reactor is subsequently oxidized, or at least partial oxidized, using an oxidation chamber, and reduced in a reduction chamber, to obtain a product gas which is fed to a gas engine for providing useful energy. Exhaust gases of the gas engine are further heated by an afterburning combustion chamber and an exhaust gas outlet of the afterburning combustion chamber is connected to a heating gas inlet of the pyrolysis reactor for supplying heat to the pyrolysis reactor. The product gas is further bypassed to the afterburning combustion chamber to provide for the heating of the exhaust gas of the gas engine.

However, producing useful energy according to the prior art is inefficient and complex. It is therefore an object of the invention to provide for a more efficient way of producing useful energy from biofuels using a pyrolysis reactor.

### The invention

The invention provides for a method for producing gas from biomass. The method comprises the steps of:
- feeding said biomass to a pyrolysis unit,
- pyrolyzing said biomass in said pyrolysis unit while transporting said biomass through said pyrolysis unit to transform said biomass into pyrolysis gas and biochar,
- raising the temperature of said pyrolysis gas by guiding said pyrolysis gas through a partial oxidation unit in which said pyrolysis gas is partial oxidized,
- guiding said partial oxidized pyrolysis gas through a pyrolysis gas mantle enclosing at least a part of said pyrolysis unit to provide heat to the pyrolysis process in said pyrolysis unit,
- guiding said partial oxidized pyrolysis gas from said pyrolysis gas mantle to a cooling unit in which the temperature of said partial oxidized pyrolysis gas is lowered,
- guiding a portion of said biochar produced in said pyrolysis unit into a biochar filter, and
- guiding said cooled pyrolysis gas through said biochar in said biochar filter.

In this context, the term "biomass" should be understood as any plant- and/or animal-based material suitable as basis for production of gas.

In this context, the term "pyrolysis unit" should be understood as any kind of unit, such as a reactor, capable of performing a pyrolysis process, which is a thermochemical decomposition of organic material or fossil fuel at elevated temperatures in the absence of oxygen (or any halogen). It should also be noted that in this context the term "pyrolysis" or "pyrolyzed" also covers torrefaction which is a mild form of pyrolysis at temperatures typically between 200 °C and 320 °C depending on the specific material being pyrolyzed.

In this context, the term "pyrolysis gas" should be understood as an at least partly combustible gas obtained from the pyrolysis process.

In this context, the term "biochar" should be understood as solid material obtained from the pyrolysis process. Biochar is a porous material enriched in non-fossil carbon.

It should be noted that the term "partial oxidation" should be understood such that some oxygen is added to the pyrolysis gas but not enough to fully combust the pyrolysis gas completely. Thus, according to this aspect, enough oxygen is added such that the pyrolysis gas is partly combusted. Furthermore, it should be noted that the oxygen may be added in the form of pure liquid or gaseous oxygen, an oxygen containing compound - such as air or other, a mixture of oxygen and water vapor, a mixture of oxygen and CO2 and/or in another form and/or mixed with another gas or vapor.

In this context, the term "pyrolysis gas mantle" should be understood as a mantle enclosing at least a part of the pyrolysis unit and which is arranged to contain and guide partial oxidized pyrolysis gas while transferring heat from the partial oxidized pyrolysis gas to the pyrolysis unit. Thus, the pyrolysis gas mantle may serve as a heating mantle providing an additional source of heat for the pyrolysis process within the pyrolysis unit.

In this context, the term "cooling unit" should be understood as any kind of unit capable of cooling pyrolysis gas.

In this context, a "biochar filter" should be understood as a filter which utilizes biochar as filtering material. The biochar filter may effectively bind remainders of tar, chlorine and/or other undesired substances present in the partial oxidized pyrolysis gas in the biochar present within the biochar filter.

The above method of producing gas from biomass is advantageous method for several reasons. By transferring the partial oxidized pyrolysis gas through the pyrolysis gas mantle - which encloses at least a part of the pyrolysis unit - is obtained that the heat energy of the high temperature pyrolysis gas, which may be in the range from 800 °C and 900 °C, may be used for heating of the biomass transported through the pyrolysis unit and thus contribute to the pyrolysis process itself. Using the heat energy of the partial oxidized pyrolysis gas in this way is advantageous in that the need of externally provided energy to the pyrolysis unit may be reduced and thus is provided an energy efficient method of producing gas from biomass.

By guiding the cooled pyrolysis gas through a biochar filter is achieved that tar present in the pyrolysis gas is bound in the biochar. By tar may be understood a mixture of mostly aromatic hydrocarbons formed during pyrolysis. Removing tar from the pyrolysis gas is advantageous because tar may condense at which may pose problems to components in contact with tar-containing pyrolysis gas, such as a gas engine being powered at least by pyrolysis gas. Using a biochar filter to remove tar from gas constitutes a more energy efficient method than for example methods including gasification which is a process occurring at much higher temperatures. When treating biomaterial using a gasifier several problems may arise depending on the type of gasifier used. For example, ash sintering caused by high temperature treatment of the biomaterial may affect the usability of some gasifiers. By instead processing the pyrolysis gas with a biochar filter is achieved that any problems related to ash sintering may be alleviated, and the process temperature may be kept at a much lower temperatures since the biochar filter makes use of a filtering process instead.

Guiding the pyrolysis gas through a partial oxidation unit is advantageous in that partial oxidation of tar compounds, which may be present in the pyrolysis gas, may prevent coking on the surface of the biochar and prevent deactivation of the biochar.

Since only a portion of the biochar produced in the pyrolysis unit is fed into the biochar filter is achieved that another portion of the biochar, produced by the pyrolysis unit, may be used for other advantageous purposes. As an example, biochar is particularly useful for agricultural purposes such as soil improvement, and furthermore, biochar is well suited for carbon sequestration. A fraction of the carbon contained in biochar can persist in the soil for a very long time. Carbon-14 dating indicates that some fractions of char is stable for more than 10.000 years. Biochar is particularly beneficial for coarse sandy soils where it may help improving root growth and yields of spring barley.

In an aspect of the invention, said portion of biochar is guided through a biochar heating unit in which said portion of biochar is activated by heating said portion of biochar, before guiding said portion of biochar into said biochar filter.

In this context, a "biochar heating unit" should be understood as any kind of unit capable of heating biochar for the purpose of activating biochar. It should further be noted that by "activating" biochar is understood a process in which the biochar, which is typically a highly dense carbonaceous material, is transformed into a less dense and more porous carbonaceous material which may also be referred to as activated biochar, activated carbon or activated charcoal. Activated biochar is a material characterized by having a highly porous structure and thus a high surface area per unit volume. This makes activated biochar well suited for adsorption which is the attachment or adhesion of atoms, ions and molecules (adsorbates) from a gaseous, liquid or solution medium onto a surface of the adsorbant. The porosity of activated carbons, e.g. activated biochar, offers a vast surface on which this adsorption can take place. Adsorption occurs in pores slightly larger than the adsorbates, such as impurities like tar and chlorine which may be present in the partial oxidized pyrolysis gas, that are being adsorbed. The adsorbates become trapped within the internal pore structure of the activated biochar by Van Der Waals Forces or other bonds of attraction and accumulate onto a solid surface.

Heating said portion of biochar by guiding it through a biochar heating unit is advantageous in that the temperature within the pyrolysis unit may not be high enough for the activation of biochar to occur, and thus additional heating may be necessary.

In an aspect of the invention, said portion of biochar is activated by addition of steam to said portion of biochar.

By addition of steam may be realized a physical activation of biochar using steam. Steam activation is advantageous in that the pore size of the biochar may be increased and the steam may have an additional advantageous effect in that it may reduce the temperature of the activated biochar before it enters the biochar filter.

In an aspect of the invention, said portion of biochar is cooled before entering said biochar filter.

Cooling the biochar before the biochar enters the biochar filter is advantageous in that the efficiency of the biochar filter may be improved. At high temperatures, the biochar in the biochar filter may not be very effective in adsorbing tar present in the pyrolysis gas and thus the biochar filters efficiency in binding tar present in the pyrolysis gas may be improved by cooling the biochar.

In a further aspect of the invention, said portion of biochar is cooled to a temperature in the range from 100 °C to 225 °C before entering said biochar filter.

Lowering the temperature of the biochar to between 100 °C and 225 °C is advantageous in that the pyrolysis gas, in its interaction with the biochar in the biochar filter, may be maintained at a temperature above the dew point of water. The dew point is the temperature, at a given pressure, at which the pyrolysis gas is saturated with water vapor. Below the dew point, liquid will begin to condensate on solid surfaces and this may impose significant problems to the biochar filter and other components related to the method of producing gas from biomass. However, if the pyrolysis gas and/or biochar becomes too hot, the biochar filter may not efficiently filter off tar which may be present in the pyrolysis gas. Thus, it is advantageous to cool the biochar to a temperature range in between the dew point of water and a higher temperature, such as 225 °C, above which the tar in the pyrolysis gas may not effectively be adsorbed in the biochar filter.

In an aspect of the invention, after having guided said cooled pyrolysis gas through said biochar in said biochar filter, said biochar is fed back into said pyrolysis unit.

As the partial oxidized pyrolysis gas is passed through the biochar in the biochar filter, the biochar may become saturated and gradually loose its filtering properties. It may thus be advantageous to feed the biochar from the biochar filter back into the pyrolysis unit since used biochar may be replaced with new biochar in the biochar filter.

Furthermore, feeding, e.g. recirculating, the biochar back into the pyrolysis unit after the cooled pyrolysis gas is guided through the biochar in the biochar filter is advantageous in that filtered tar may be converted to pyrolysis gas in the pyrolysis unit instead of being present in the biochar. A further advantage of the recirculation of the biochar is that the biochar present in the biochar filter may be replaced by new activated biochar.

In an aspect of the invention, said pyrolysis gas produced in said pyrolysis unit is guided through a high temperature filter before entering said partial oxidation unit.

In this context, the term "high temperature filter" should be understood as any kind of filter capable of filtering pyrolysis gas at high temperatures, such as temperatures in the range from 550 °C to 720 °C.

Guiding the pyrolysis gas through a high temperature filter is advantageous in that particles which may be present in the pyrolysis gas exiting the pyrolysis unit, and which may cause unwanted effects in the partial oxidation unit such as coatings of the internals of the partial oxidation unit, may be removed from the pyrolysis gas before the pyrolysis gas is passed through the partial oxidation unit.

In an aspect of the invention, said pyrolysis gas after having been guided through said biochar in said biochar filter is mixed with air to form fuel which is guided into a gas engine in which said fuel is combusted to drive said gas engine.

By mixing the pyrolysis gas which have been guided through the biochar filter with air is achieved a highly combustible fuel which is well suited for combustion in an engine such as a gas engine. Combusting the fuel in a gas engine is advantageous in that usable energy may be produced for e.g. generation of electricity.

In an aspect of the invention, at least a part of the exhaust gas from said combustion of said fuel in said gas engine is guided through an exhaust gas mantle enclosing at least a part of said pyrolysis unit to provide heat to the pyrolysis process in said pyrolysis unit.

In this context, the term "exhaust gas mantle" should be understood as a mantle enclosing at least a part of the pyrolysis unit and which is arranged to contain and guide exhaust gas from the gas engine while transferring the heat from the exhaust gas to the pyrolysis unit. Thus, the exhaust gas mantle may serve as a heating mantle providing an additional source of heat for the pyrolysis process within the pyrolysis unit.

By guiding the exhaust gas through the exhaust gas mantle which encloses at least a part of the pyrolysis unit is obtained that the heat energy of the high temperature exhaust gas, which may be in the range from 450 °C to 600 °C, may be used for heating of the pyrolysis unit and thus contribute to the pyrolysis process itself. Using the heat energy of the exhaust gas in this way is advantageous in that the need of externally provided energy to the pyrolysis unit may be reduced and thus is provided an efficient method of producing gas from biomass. The guiding of the exhaust gas through the exhaust gas mantle may also be advantageous in that the exhaust gas may then be used for pre-heating of the pyrolysis unit.

In an aspect of the invention, said biomass is continuous transported through said pyrolysis unit.

Continuous transport of the biomass through the pyrolysis unit is advantageous in that a continuous production of pyrolysis gas may be produced which may be needed for a sustained combustion of fuel in the gas engine. In this way, the gas engine may be operated in a continuous way without unnecessary stops and starts of the gas engine. Thereby may be achieved a steady power production by the gas engine, which is preferable if the gas engine produces electricity to be put into a power grid, and furthermore, long-life durability of the gas engine may be improved.

In an aspect of the invention, said biomass is transported through said pyrolysis unit by means of at least one screw conveyer.

Transporting the biomass through the pyrolysis unit by means of at least one screw conveyor is advantageous in that the biomass may be transported through the pyrolysis unit in a manner which reduces the time of contact between the biomass and parts of the pyrolysis unit, and thereby problems caused by adherence of biomass to parts of the pyrolysis unit may be reduced. Furthermore, a screw conveyor may advantageously be used to control the time in which the biomass undergoes a pyrolysis process in the pyrolysis unit since this time is directly linked to the rotational speed of the screw conveyor which may easily be controlled by e.g. an electric motor. Adjustments to the time in which the biomass undergoes pyrolysis may be required depending on the temperature within the pyrolysis unit.

Transporting the biomass through the pyrolysis unit by means of at least one screw conveyor is furthermore advantageous if the biomass contains high levels of water content because a screw conveyor is ideal for conveying even fluid or sluggish material.

In an aspect of the invention, the temperature of said partial oxidized pyrolysis gas is lowered to between 100°C and 225°C in said cooling unit.

Lowering the temperature of the pyrolysis gas to between 100 °C and 225 °C is advantageous in that the pyrolysis gas may be maintained at a temperature above the dew point of water. The dew point is the temperature, at a given pressure, at which the pyrolysis gas is saturated with water vapor. Below the dew point, liquid will begin to condensate on solid surfaces and this may impose significant problems to the biochar filter and other components related to the method of producing gas from biomass. However, if the pyrolysis gas becomes too hot, the biochar filter may not efficiently filter off tar which may be present in the pyrolysis gas. Thus, it is advantageous to cool the pyrolysis gas to a temperature range in between the dew point of water and a higher temperature, such as 225 °C, above which the tar in the pyrolysis gas may not effectively be adsorbed in the biochar filter.

In an aspect of the invention, said portion of biochar is heated to a temperature above 600°C to activate said portion of biochar before guiding said portion of biochar into said biochar filter.

By heating the biochar to a temperature above 600 °C is achieved that the biochar becomes activated. This is advantageous in that the activated biochar may be used to in the biochar filter to filter the pyrolysis gas.

In an aspect of the invention, said method is a method for producing gas from biomass with an ash content above 3% by mass.

Examples of "biomass with ash content above 3% by mass" could be straw (wheat, barley, rye, oats, grass and rape), rice hulls, nut shells, cotton trash, bamboo, corn, sugarcane and animal waste such as slaughterhouse waste, dairy waste, manure or other type of biomass with ash content above 3% by mass.

The determination of ash content in biomass may be performed according to the method described in "Technical Report NREL/TP-510-42622 January 2008, issue date 17 July 2005, A. Sluiter et al" or a similar method as described in ASTM Standard Method Number E1755-01 "Standard Method for the Determination of Ash in biomass".

Biochar produced after pyrolysis of biomass with ash content above 3% by mass can usually not withstand the high temperatures necessary to run an efficient gasification process in a gasifier system without melting and forming solid material (also called sintering) which may clog the gasifier system and/or severely decrease the efficiency of the gasifier system. Thus, biochar produced from biomass with ash content above 3% by mass is more suited for filtering processes occurring at much lower temperatures than typical gasification temperatures, and therefore such biomass may advantageously be used in a biochar filter.

In an aspect of the invention, excess heat produced by said method is used to dry said biomass prior to feeding said biomass to said pyrolysis unit.

Drying the biomass before feeding it to the pyrolysis unit is advantageous in that the water content of the biomass may be reduced before the biomass is fed to the pyrolysis unit. By decreasing the water content in the biomass is achieved that the efficiency of the pyrolysis process may be increased and adverse effects of water on stability, viscosity, pH, corrosiveness and other liquid properties in the pyrolysis product may be avoided.

Furthermore, the invention provides for a system for producing gas from biomass, said system comprising:
- a pyrolysis unit arranged for pyrolyzing said biomass, wherein said pyrolysis unit comprises transport means arranged for transporting said biomass through said pyrolysis unit to transform said biomass into pyrolysis gas and biochar,
- a pyrolysis gas mantle enclosing at least a part of said pyrolysis unit, wherein said pyrolysis gas mantle is arranged to heat said biomass in said pyrolysis unit,
- a partial oxidation unit arranged to partial oxidize pyrolysis gas produced in said pyrolysis unit,
- a first pyrolysis gas conduit arranged to guide partial oxidized pyrolysis gas from said partial oxidation unit and into said pyrolysis gas mantle,
- a cooling unit arranged to cool said partial oxidized pyrolysis gas leaving said pyrolysis gas mantle,
- a biochar conduit arranged to guide a portion of said biochar produced in said pyrolysis unit into a biochar filter, and
- a second pyrolysis gas conduit arranged to guide said cooled pyrolysis gas from said cooling unit and through said biochar in said biochar filter.

In this context, the term "transport means" should be understood as any kind of means which is capable of transporting biomass through a pyrolysis unit. Examples of transporting means may comprise screw conveyors, belt conveyors, drag conveyors or any other type of conveyor capable of transporting biomass.

In this context, the term "pyrolysis gas conduit" should be understood as pipes, ducts, tubes, or other kind of gas leader for conducting pyrolysis gas.

In this context, the term "biochar conduit" should be understood as any kind of conduit capable of transporting biochar along a path to the biochar filter. The biochar conduit may comprise any number of conduit elements such as tubes, ducts, conduits or other elements suitable for the transport of biochar. The path to the biochar filter, as defined by the biochar conduit, may be a path from the pyrolysis unit to the biochar filter, and the path may thus comprise any number of conduit elements. Furthermore, the biochar conduit may comprise one or more units for activation of biochar and/or transport means for transporting biochar along the path as defined by the biochar conduit. As an example, the biochar conduit may comprise one or more screw conveyors, belt conveyors, drag conveyors, or other types of conveyors capable of transporting biochar.

By the present system is achieved an advantageous system for producing gas from biomass. The pyrolysis gas mantle of the system allows hot pyrolysis gas to be utilized for heating the biomass in the pyrolysis unit, and thereby is achieved an efficient system for producing gas from biomass.

In an aspect of the invention, said transporting means comprises at least one screw conveyor.

In an aspect of the invention, said cooling unit comprises a heat exchanger.

In this context, the term "heat exchanger" is understood as any kind of unit capable of transferring heat from a fluid (liquid or gas) to a second fluid (another liquid or gas) without the two fluids having to mix together or come into direct contact.

A heat exchanger is advantageous in that heat may be extracted from the cooling unit and used for other purposes such as pre-heating of the biomass.

In an aspect of the invention, said system further comprises a biochar heating unit located in said biochar conduit, wherein said biochar heating unit is arranged to activate said portion of biochar by heating said portion of biochar.

In an aspect of the invention, said system comprises a gas engine for combustion of pyrolysis gas leaving said biochar filter.

In an aspect of the invention, said system further comprises an exhaust gas mantle enclosing at least a part of said pyrolysis unit to provide heat to the pyrolysis process in said pyrolysis unit.

In an aspect of the invention, said system comprises means for drying biomass using waste heat produced in said system before said biomass is fed to the pyrolysis unit.

In this context, the term "waste heat" is understood as any heat produced by the system, for example heat energy produced by a gas engine, heat energy extracted from cooling biochar prior to feeding biochar into the biochar filter, heat energy extracted from cooling the partial oxidized pyrolysis gas prior to feeding it to the biochar filter.

Drying biomass using waste heat produced in the system is advantageous in that the water content of the biomass may thereby be reduced, in an energy efficient manner, before the biomass is fed to the pyrolysis unit. By decreasing the water content in the biomass is achieved that the efficiency of the pyrolysis process may be increased and adverse effects of water on stability, viscosity, pH, corrosiveness and other liquid properties in the pyrolysis product may be avoided.

In an aspect of the invention, said system is arranged to produce gas from biomass by means of a method according to any of the description above.

### Figures

The invention will be described in the following with reference to the figures in which
fig. 1 illustrates a method of producing gas from biomass according to an embodiment of the invention,
fig. 2 illustrates a method of producing gas from biomass in which biochar is reused according to an embodiment of the invention,
fig. 3. illustrates a system for producing gas from biomass according to an embodiment of the invention, and
fig. 4 illustrates a system for producing gas from biomass wherein exhaust gas from a gas engine is used to provide heat to a pyrolysis process according to an embodiment of the invention.

### Detailed description

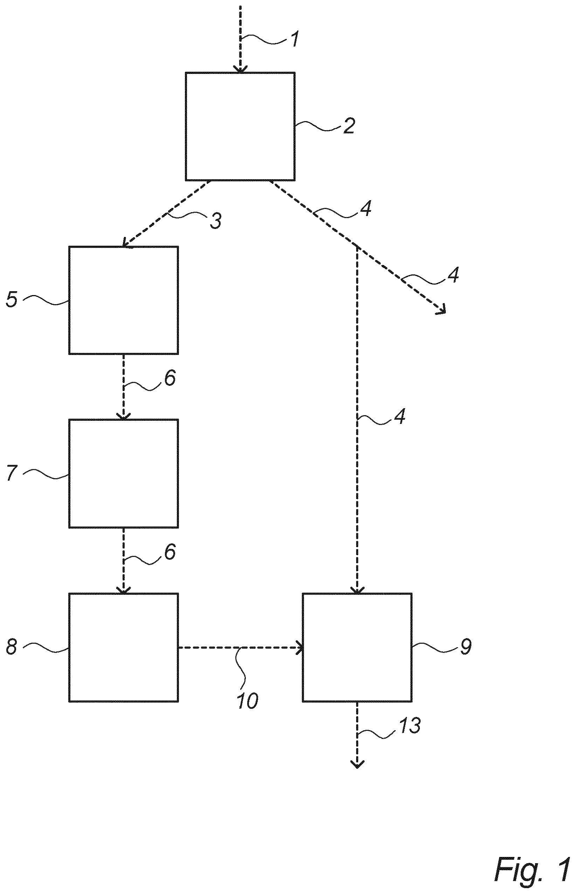

Fig. 1 illustrates a method of producing gas from biomass according to an embodiment of the invention.

The concept of the invention is to feed biomass 1 to a pyrolysis unit 2 for producing gas from the biomass. Biomass 1 is fed to a pyrolysis unit 2 in which the biomass 1 is transported through while undergoing a pyrolysis process to transform the biomass 1 into pyrolysis gas 3 and biochar 4. The heat which is necessary for the pyrolysis process to occur may at least partly be provided by a pyrolysis gas mantle 7. The pyrolysis unit 2 produces two outputs: pyrolysis gas 3 and biochar 4.

The pyrolysis gas 3 may be guided to a partial oxidation unit 5 in which the temperature of the pyrolysis gas 3 is raised by a partial oxidation process. The partial oxidized pyrolysis gas 6 which leaves the partial oxidation unit 5 may be guided through a pyrolysis gas mantle 7. The pyrolysis gas mantle 7 encloses at least a part of the pyrolysis unit 2 (enclosure not shown in the drawing) such that the heat energy of the partial oxidized pyrolysis gas 6 may be used to provide heat to the pyrolysis process in the pyrolysis unit 2. After the partial oxidized pyrolysis gas 6 has been guided through the pyrolysis gas mantle 7, the partial oxidized pyrolysis gas 6 is guided to a cooling unit 8 in which the temperature of the partial oxidized pyrolysis gas 6 is lowered. The cooled pyrolysis gas 10 leaving the cooling unit 8 is then guided to a biochar filter 9.

The biochar 4 produced in the pyrolysis unit 2 leaves the pyrolysis unit 2 and a portion of the biochar 4 is guided to the biochar filter 9. Another portion of the produced biochar 4 may be used for other purposes such as soil improvement or carbon sequestration. The cooled pyrolysis gas 10 is guided through the biochar 4 in the biochar filter 9 in which the cooled pyrolysis gas 10 is filtered. The filtering may e.g. reduce the amount of the tar present in the pyrolysis gas. Filtered pyrolysis gas 13 is then produced. The filtered pyrolysis gas 13 may be used for various purposes. In an embodiment of the invention, the filtered pyrolysis gas 13 is used to power a gas engine 15 to provide useful work for e.g. production of electricity.

For sake of completeness, any dotted line in fig. 1 may further represent means for transporting pyrolysis gas, such as a gas tube, a gas duct, or a gas conduit.

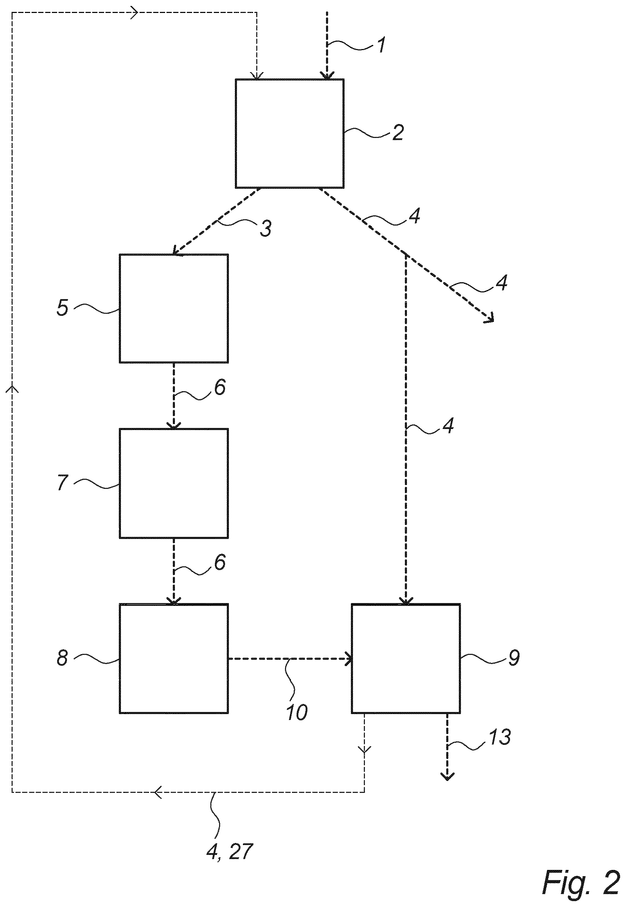

Fig. 2 illustrates a method of producing gas from biomass in which biochar is reused according to an embodiment of the invention.

The embodiment shown in fig. 2 is almost identical to the embodiment of the invention as shown in fig. 1. This embodiment differs in that the biochar 4 which has been used in the biochar filter 9 to remove e.g. tar from the cooled pyrolysis gas 10 is fed back into the pyrolysis unit 2 along a return path 27. This recirculation of biochar ensures that tar-containing substances which have been filtered off in the biochar filter 9 may be converted into pyrolysis gas instead of remaining absorbed in the biochar 4. Although not shown in the drawing, the recirculation of the biochar may be performed by additional transport means for transporting used biochar 4 from the biochar filter 9 and back into the pyrolysis unit 2.

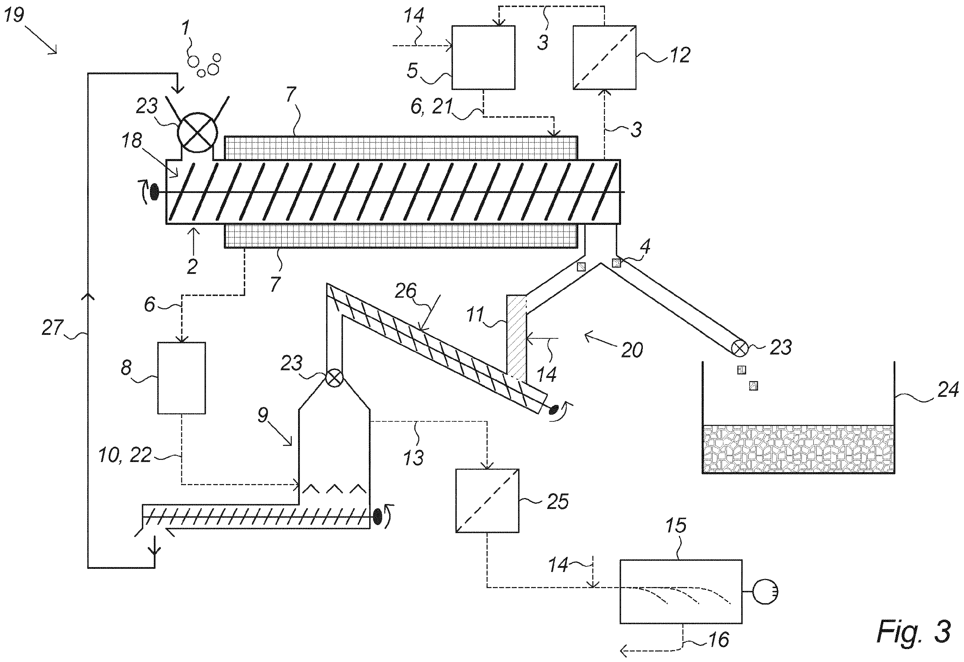

Fig. 3 illustrates a system 19 for producing gas from biomass 1 according to an embodiment of the invention.

The system 19 comprises a pyrolysis unit 2 for transforming, by pyrolysis, biomass 1 into pyrolysis gas 3 and biochar 4. The biomass 1 may be fed to the pyrolysis unit 2 through a rotary valve 24. The rotary valve 24, which may also be referred to as a rotary airlock or as a rotary feeder, allows passage of biomass 1 into the pyrolysis unit 2 while at the same time maintaining an airlock condition such that any gases produced in the pyrolysis unit 2 cannot escape through it. Once fed to the pyrolysis unit 2, the biomass may be transported through the pyrolysis unit by transport means 18. In this embodiment of the invention, the transport means 18 is a screw conveyor, however in other embodiments of the invention the transport means 18 may take other forms such as belt conveyors, drag conveyors or any other type of conveyor suitable for transporting biomass inside a pyrolysis unit 2. As the screw conveyor 18 is rotated about a main axis of the screw conveyor, biomass 1 is transported through the pyrolysis unit 2.

As the biomass 1 is transported through the pyrolysis unit 2 it undergoes a process of pyrolysis in which pyrolysis gas 3 and biochar 4 are produced. The system 19 further comprises a high temperature filter 12 in which the pyrolysis gas 3 produced in the pyrolysis unit is filtered before the pyrolysis gas 3 undergoes a process of partial oxidation. At this stage, the pyrolysis gas 3 may have a temperature in the range from 550 °C to 720 °C. The high temperature filter 12 serves to remove particles in the pyrolysis gas 3 which may result in unwanted particle deposition in various components of the system 19, such as in a partial oxidation unit. In other embodiments of the invention, the pyrolysis gas 3 produced in the pyrolysis unit 2 is guided directly to the partial oxidation unit 5 without being subject to filtering in a high-temperature filter 12 first.

The system 19 further comprises a partial oxidation unit 5 which takes as input the pyrolysis gas 3 emerging from the high temperature filter 12 as well as air 14. The partial oxidation unit serves to decompose tar-containing substances present in the pyrolysis gas 3. The partial oxidized pyrolysis gas 6 emerging from the partial oxidation unit 5 is fed, by a first pyrolysis gas conduit 21, to a pyrolysis gas mantle 7. As shown in fig. 3, the pyrolysis gas mantle 7 encloses at least a part of the pyrolysis unit 2. The pyrolysis gas mantle 7 is arranged to contain and guide the partial oxidized pyrolysis gas 6, which is at a high temperature such as at a temperature in the range from 800 °C to 900 °C. The pyrolysis gas mantle 7 ensures that the high temperature partial oxidized pyrolysis gas 6 may be used to provide heat to the pyrolysis process in the pyrolysis unit 2.

After passing on heat to the pyrolysis process in the pyrolysis unit 2, the partial oxidized pyrolysis gas 6 is guided to a cooling unit 8. The cooling unit 8 is arranged to reduce the temperature of the partial oxidized pyrolysis gas to a temperature in the range from 100 °C to 225 °C, and these temperatures are chosen based on the considerations that water vapor present in the pyrolysis gas should not condensate, i.e. the partial oxidized pyrolysis gas 6 should not be cooled below the dew point of water, and furthermore, the temperature of the partial oxidized pyrolysis gas, after cooling in the cooling unit 8, should not be so high that further filtering of remaining tar in the gas is inhibited. The cooling unit 8 may comprise a heat exchanger.

After cooling in the cooling unit 8, the now cooled pyrolysis gas 10 is guided by a second pyrolysis gas conduit 22 to a biochar filter 9. The biochar filter 9 of the system 19 is arranged to pass the cooled pyrolysis gas 10 through activated biochar present in the biochar filter 9. In the biochar filter 9, tar present in the cooled pyrolysis gas 10 is adsorbed on activated biochar and thus tar is effectively removed from the cooled pyrolysis gas 10 and bound in the activated biochar of the biochar filter 9. The biochar 4 which have become saturated with tar by filtering off tar in the cooled pyrolysis gas 10 may exit through the biochar filter 9 and be replaced with new activated biochar 4. In the present embodiment, the used and saturated biochar 4 may exit the biochar filter 9 by means of a screw conveyor, however in other embodiments of the invention, the biochar may be transported away from the filter by other means. In this embodiment of the invention, the system 19 is arranged such that used biochar 4 is fed back into the pyrolysis unit 2 along a return path 27 to undergo the pyrolysis process once more.

The filtered pyrolysis gas 13 which exits the biochar filter 9 is passed through an auxiliary pyrolysis gas filter 25 where impurities, e.g. residual particles from the process in the biochar filter 9, are removed. The filtered pyrolysis gas 13 which have passed through the auxiliary pyrolysis gas filter 25 is mixed with air 14 in e.g. a carburetor (not shown) to obtain a fuel which is fed to a gas engine 15 for combustion. The gas engine may produce useful work for e.g. production of electricity. In other embodiments of the invention, the filtered pyrolysis gas 13 emerging from the biochar filter 9 is directly mixed with air 14 to obtain a fuel without being subjected to additional filtering in an auxiliary pyrolysis filter 25 first. The gas engine 15 produces exhaust gas 16, which according to another embodiment of the invention is used to provide heat to the pyrolysis unit 2.

The biochar 4 produced by the pyrolysis process in the pyrolysis unit 2 emerges from the pyrolysis unit 2 and follows two streams. A portion of the produced biochar 4 is passed through a rotary valve 23 and directly captured in a biochar container 24 which is any kind of container capable of storing biochar. This rotary valve 23 ensures that the pyrolysis process in the pyrolysis unit 2 is unaffected by the environment and that the pyrolysis process pressure is maintained. Another portion of the biochar is used in the biochar filter 9. This portion of biochar 4 is guided to the biochar filter 9 by a biochar conduit 20. The biochar conduit 20 of this embodiment comprises a biochar heating unit 11. The biochar heating unit is a unit capable of raising the temperature of the produced biochar 4 to a temperature above 600 °C. This high temperature may be necessary for activation of the biochar 4. In this embodiment of the invention, the temperature of the biochar 4 is raised by addition of air 14 to the biochar 4, however according to other embodiments of the invention, oxygen may be added or any other species capable of raising the temperature of the biochar 4 once added to the stream of biochar 4. As shown, in fig. 3 the biochar conduit 20 of the present embodiment comprises another screw conveyor for transporting the biochar 4 from the biochar heating unit 11 to the biochar filter 9, however, in other embodiments of the invention, the biochar 4 may be transported from the biochar heating unit 11 to the biochar filter 9 by other means. The biochar conduit 20 of the present embodiment of the invention is mechanically coupled to the biochar filter 9 by means of a rotary valve 23, such that the cooled pyrolysis gas 10 which enters the biochar filter 9 does not return back into the pyrolysis unit 2 through the biochar conduit 20.

The biochar 4 is activated by addition of steam 26 which may be added to the heated biochar 4 which have passed through the biochar heating unit 11. In addition to activating the biochar 4, the steam 26 cools the biochar 4 before it enters the biochar filter 9.

For sake of completeness, any dotted line in fig. 3 may further represent means for transporting pyrolysis gas or exhaust gas, such as a tube, a duct, or a conduit.

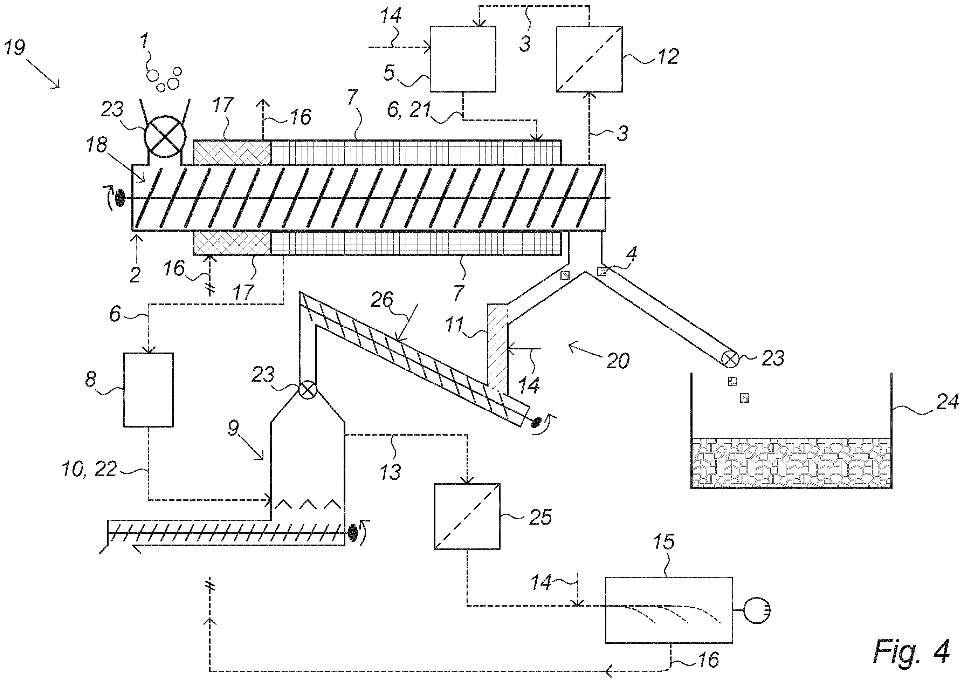

Fig. 4 illustrates a system 19 for producing gas from biomass 1 wherein exhaust gas 16 from a gas engine 15 is used to provide heat to a pyrolysis process according to an embodiment of the invention.

The embodiment shown in fig. 4 is almost identical to the embodiment of the invention as shown in fig. 3. This embodiment differs in that the exhaust gas 16 from the gas engine 15 is guided through an exhaust gas mantle 17 enclosing at least a part of the pyrolysis unit 2 to provide heat to the pyrolysis process in the pyrolysis unit 2. The exhaust gas 16 from the gas engine 15 may have a high temperature, such as a temperature in the range from 450 °C to 600 °C. This high temperature makes the exhaust gas 16 suitable for providing heat to the pyrolysis process in the pyrolysis unit 2. The exhaust gas mantle 17 in this embodiment is shown to enclose a smaller part of the pyrolysis unit 2 than the pyrolysis gas mantle 7, however the invention is not limited to an exhaust gas mantle 7 enclosing a smaller part of the pyrolysis unit 2 and the exhaust gas mantle 7 may, in other embodiments of the invention, enclose a greater part of the pyrolysis unit 2. By enclosing the pyrolysis unit 2 with an exhaust gas mantle 17 is achieved that the heat energy of the exhaust gas 16 from the gas engine 15 may be used for heating, e.g. pre-heating, the biomass 1 in the pyrolysis unit 2. Thereby is achieved a more energy efficient system 19 for producing gas from biomass 1.

### List:

- 1: Biomass
- 2: Pyrolysis unit
- 3: Pyrolysis gas
- 4: Biochar
- 5: Partial oxidation unit
- 6: Partial oxidized pyrolysis gas
- 7: Pyrolysis gas mantle
- 8: Cooling unit
- 9: Biochar filter
- 10: Cooled pyrolysis gas
- 11: Biochar heating unit
- 12: High temperature filter
- 13: Filtered pyrolysis gas
- 14: Air
- 15: Gas engine
- 16: Exhaust gas
- 17: Exhaust gas mantle
- 18: Transport means
- 19: System for producing gas from biomass
- 20: Biochar conduit
- 21: First pyrolysis gas conduit
- 22: Second pyrolysis gas conduit
- 23: Rotary valve
- 24: Biochar container
- 25: Auxiliary pyrolysis gas filter
- 26: Steam
- 27: Return path

## Claims

1. A method for producing gas from biomass (1), said method comprising the steps of:
• feeding said biomass (1) to a pyrolysis unit (2),
• pyrolyzing said biomass (1) in said pyrolysis unit (2) while transporting said biomass (1) through said pyrolysis unit (2) to transform said biomass (1) into pyrolysis gas (3) and biochar (4),
• raising the temperature of said pyrolysis gas (3) by guiding said pyrolysis gas (3) through a partial oxidation unit (5) in which said pyrolysis gas (3) is partial oxidized,
• guiding said partial oxidized pyrolysis gas (6) through a pyrolysis gas mantle (7) enclosing at least a part of said pyrolysis unit (2) to provide heat to the pyrolysis process in said pyrolysis unit (2),
• guiding said partial oxidized pyrolysis gas (6) from said pyrolysis gas mantle (7) to a cooling unit (8) in which the temperature of said partial oxidized pyrolysis gas (6) is lowered,
• guiding a portion of said biochar (4) produced in said pyrolysis unit (2) into a biochar filter 9, and
• guiding said cooled pyrolysis gas (10) through said biochar (4) in said biochar filter (9).

2. A method according to claim 1, wherein said portion of biochar (4) is guided through a biochar heating unit (11) in which said portion of biochar (4) is activated by heating said portion of biochar (4), before guiding said portion of biochar (4) into said biochar filter (9).

3. A method according to claim 1 or 2, wherein after having guided said cooled pyrolysis gas (10) through said biochar (4) in said biochar filter (9), said biochar (4) is fed back into said pyrolysis unit (2).

4. A method according to any of the preceding claims, wherein said pyrolysis gas (3) produced in said pyrolysis unit (2) is guided through a high temperature filter (12) before entering said partial oxidation unit (5).

5. A method according to any of the preceding claims, wherein said pyrolysis gas (13) after having been guided through said biochar (4) in said biochar filter (9) is mixed with air (14) to form fuel which is guided into a gas engine (15) in which said fuel is combusted to drive said gas engine (15).

6. A method according to claim 5, wherein at least a part of the exhaust gas (16) from said combustion of said fuel in said gas engine (15) is guided through an exhaust gas mantle (17) enclosing at least a part of said pyrolysis unit (2) to provide heat to the pyrolysis process in said pyrolysis unit (2).

7. A method according to any of the preceding claims, wherein said biomass (1) is continuous transported through said pyrolysis unit (2).

8. A method according to any of the preceding claims, wherein said biomass (1) is transported through said pyrolysis unit (2) by means of at least one screw conveyer (18).

9. A method according to any of the preceding claims, wherein the temperature of said partial oxidized pyrolysis gas (6) is lowered to between 100°C and 225°C in said cooling unit (8).

10. A method according to any of the preceding claims, wherein said portion of biochar (4) is heated to a temperature above 600°C to activate said portion of biochar (4) before guiding said portion of biochar (4) into said biochar filter (9).

11. A method according to any of the preceding claims, wherein said method is a method for producing gas from biomass (1) with an ash content above 3% by mass.

12. A system (19) for producing gas from biomass (1), said system comprising:
• a pyrolysis unit (2) arranged for pyrolyzing said biomass (1), wherein said pyrolysis unit (2) comprises transport means (18) arranged for transporting said biomass (1) through said pyrolysis unit (2) to transform said biomass (1) into pyrolysis gas (3) and biochar (4),
• a pyrolysis gas mantle (7) enclosing at least a part of said pyrolysis unit (2), wherein said pyrolysis gas mantle (7) is arranged to heat said biomass (1) in said pyrolysis unit (2),
• a partial oxidation unit (5) arranged to partial oxidize pyrolysis gas (3) produced in said pyrolysis unit (2),
• a first pyrolysis gas conduit (21) arranged to guide partial oxidized pyrolysis gas (6) from said partial oxidation unit (5) and into said pyrolysis gas mantle (7),
• a cooling unit (8) arranged to cool said partial oxidized pyrolysis gas (6) leaving said pyrolysis gas mantle (7),
• a biochar conduit (20) arranged to guide a portion of said biochar (4) produced in said pyrolysis unit (2) into a biochar filter (9), and
• a second pyrolysis gas conduit (22) arranged to guide said cooled pyrolysis gas (6) from said cooling unit (8) and through said biochar (4) in said biochar filter (9).

13. A system (19) according to claim 12, wherein said cooling unit (8) comprises a heat exchanger.

14. A system (19) according to claim 12 or 13, said system (19) further comprises a biochar heating unit (11) located in said biochar conduit (20), wherein said biochar heating unit (11) is arranged to activate said portion of biochar (4) by heating said portion of biochar (4).

15. A system (19) according to any of claims 12-14, wherein said system (19) is arranged to produce gas from biomass (1) by means of a method according to any of claims 1-11.
